# EUROPÄISCHE PATENTSCHRIFT

(11) **EP 1 637 623 B1**
(45) Veröffentlichungstag und Bekanntmachung des Hinweises auf die Patenterteilung: **26.03.2008**
(21) Anmeldenummer: 05405484.6
(22) Anmeldetag: 18.08.2005
(51) Int. Cl.: C23C 4/08, C22C 1/04

(54) **Spritzpulver**
Spray powder, bearing element of a bearing device coated with the sprayed powder
Poudre de pulvérisation, élément de palier d'un dispositif de palier revêtu avec la poudre de pulvérisation

(30) Priorität: 17.09.2004 EP 04405593
(43) Veröffentlichungstag der Anmeldung: 22.03.2006
(73) Patentinhaber: Sulzer Metco AG, 5610 Wohlen (CH)
(72) Erfinder: Barbezat, Gérard, 8152 Opfikon (CH)
(74) Vertreter: Sulzer Management AG

(56) Entgegenhaltungen:
- EP-A- 0 407 596
- EP-A- 0 776 986
- EP-A- 0 962 541
- WO-A-03/033752
- DE-A1- 19 801 074
- DE-A1- 19 908 107
- DE-C1- 10 159 949
- US-A1- 2001 021 353
- US-A1- 2003 008 169
- US-B1- 6 475 635
- PATENT ABSTRACTS OF JAPAN Bd. 014, Nr. 192 (C-0711), 19. April 1990 (1990-04-19) & JP 02 034763 A (TOYOTA MOTOR CORP), 5. Februar 1990 (1990-02-05)
- PATENT ABSTRACTS OF JAPAN Bd. 006, Nr. 177 (C-124), 11. September 1982 (1982-09-11) & JP 57 092171 A (OILES IND CO LTD), 8. Juni 1982 (1982-06-08)
- PATENT ABSTRACTS OF JAPAN Bd. 1996, Nr. 11, 29. November 1996 (1996-11-29) & JP 08 174272 A (MITSUI MINING & SMELTING CO LTD), 9. Juli 1996 (1996-07-09)

## Beschreibung

Die Erfindung betrifft ein Spritzpulver, eine mit dem Spritzpulver erzeugte kupferhaltige Oberflächenschicht, insbesondere eine Oberflächenschicht auf einem Lagerteil einer Lagervorrichtung, sowie ein Verfahren zum Aufbringen einer solchen Oberflächenschicht gemäss dem Oberbegriff des unabhängigen Anspruchs der jeweiligen Kategorie.

Lagervorrichtungen aller Art, z.B. Gleit- und Wälzlager nehmen in der Technik den überwiegenden Anteil von eingesetzten Lagern ein. Unter dem Begriff Lager bzw. Lagervorrichtungen sind im Folgenden alle, die Funktion des Lagers definierenden, z.B. aufeinander abrollenden, bzw. abgleitenden oder ineinander abgestützen Lagerteile zu verstehen, die in lagerndem Kontakt zusammenwirken.

Mit der an den in lagerndem Kontakt zusammenwirkenden Lagerlaufflächen entstehenden Reibung, sind in der Regel Verschleißerscheinungen verbunden, besonders an den Lagerlaufflächen. Damit diese Verschleißerscheinungen nicht einen Wechsel der kompletten Lagervorrichtung nötig machen, werden unter anderem bei Gleitlagern Lagerschalen verwendet, die nach ihrer Abnutzung ausgetauscht werden können. Dadurch wird allerdings der konstruktive Aufbau des Gleitlagers wesentlich verkompliziert und mit dem Auswechseln der Lagerschalen wird außerdem ein kostenintensiver Wartungsprozeß nötig.

Zum Lagern von Wellen werden zum Beispiel häufig Gleitlager, insbesondere geteilte Gleitlager mit Lagerschalen verwendet. Teilweise findet auch die kombinierte Lagerung in Gleit- und Wälzlagern Anwendung. Die Wellen sind in der Regel aus geschmiedeten Stählen oder Gusseisen mit Kugelgraphit, die Gegenparte aus Vergütungsstählen geschmiedet, oder gesintert oder zum Teil auch aus Temperguss hergestellt. Die Lagerschalen sind meistens als sogenannte Zwei- oder Dreischichtlager realisiert. Die Herstellung solcher Lagerschalen ist jedoch relativ aufwendig. Bei hohen Laufleistungen der Maschine nutzen sich die Lagerschalen schließlich soweit ab, daß das Wechseln der Lagerschalen nötig wird, wobei das Wechseln der Lagerschalen in solchen Maschinen, wie oben schon erwähnt wurde, mit hohen Kosten verbunden ist.

Aber auch bei anderen Arten von Lagern, z.B. bei Kugellagern ist der vorzeitige Verschleiss der Lagerteile, also zum Beispiel der Kugeln des Kugellagers, einer durch das Kugellager zu lagernde Achse, ein Käfig für die Kugeln des Kugellagers, oder anderer Lagerteile des Kugellagers ein prinzipielles Problem, das erheblichen Aufwand für Reparaturen und Wartung nach sich zieht und letztlich mit erheblichen Kosten verbunden ist.

EP-A-776 986 offenbart ein Verfahren Zum Herstellen einer Gleitfläche auf eine Taumelscheibe durch thermisches Spritzen eines Pulvers, welches nicht weniger als 0.5 Gewichts-% und nicht mehr als 50 Gewichts-% wenigstens eine der folgenden Komponenten enthalten kann: höchstens 30 Gewichts-% Zinn, höchstens 15 Gewichts-% Aluminium, höchstens 15 Gewichts-% Silizium, höchstens 5 Gewichts-% Mangan, höchstens 30 Gewichts-% Zn, Rest Kupfer

US 2001/021 353 A1 offenbart ein Verfahren zum Beschichten eines Lagerteils durch Auftragen eines Pulvers welches Eisen, Kobalt, Aluminium, Silizium, Zink, Mangan und Rest Kupfer enthält.

Die Aufgabe der Erfindung ist es daher, die Gleiteigenschaften einer Oberfläche eines Lagerteils zu verbessern, und eine verbesserte und konstruktiv einfachere Lagervorrichtung vorzuschlagen, die eine deutlich erhöhte Lebensdauer hat.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein Spritzpulver zum Beschichten eines Substrats, insbesondere zum Beschichten eines Lagerteils einer Lagervorrichtung, welches Spritzpulver mindestens folgende Zusammensetzung aufweist: Zink = 5% bis 30% Gewichts-Prozent, Zinn = 1 % bis 10% Gewichts-Prozent, Silizium = 0.1 % bis 3% Gewichts-Prozent, Aluminium = 0.1 % bis 7% Gewichts-Prozent, Eisen = 0.01% bis 2% Gewichts-Prozent, Mangan = 0.01% bis 4% Gewichts-Prozent, Kobalt = 0.01 bis 3% Gewichtsprozent, Kupfer = Differenz auf 100% Gewichts-Prozent.

Erfindungsgemäss wird somit ein Spritzpulver bereitgestellt, mit welchem mittels eines thermischen Beschichtungsverfahrens eine kupferhaltige Oberflächenschicht auf ein Substrat aufbringbar ist. Entscheidende Bestandteile des erfindungsgemässes Pulvers sind dabei einerseits Eisen Kobalt, Mangan und Silizium, die in einer mit dem erfindungsgemässen Spritzpulver gespritzten Schicht beim Abkühlen des auf ein Werkstück aufgespritzten flüssigen Pulvers in Form von einer Hartphase als intermetallische Phasen bzw. Verbindungen ausscheiden, so dass in der Schicht mehr oder weniger isolierte Bereiche entstehen, die räumlich mehr oder weniger isolierte Hartphasen aus den zuvor erwähnten intermetallischen Phasen bzw. intermetallischen Verbindungen aus Eisen Kobalt, Mangan und Silizium bilden. Die Hartphasen bilden relativ harte Bereiche, das heisst Bereiche mit hoher Härte, in der ansonsten verhältnismässig weichen kupferhaltigen Grundmatrix, die im wesentlichen aus Kupfer, Aluminium und Zink aufgebaut ist und so eine Kupfer-Aluminium Zink-Grundmatrix ausbilden, die im Verhältnis zu den eingeschlossenen Bereichen der Hartphasen, eine weiche kupferhaltige Grundmatrix bilden.

Wie weiter unten noch eingehender erläutert wird, eignet sich somit das erfindungsgemässe Spritzpulver insbesondere zur Beschichtung der Oberfläche eines Werkstücks, welche Oberfläche mit einer anderen Oberfläche in lagerndem Kontakt zusammenwirkt, da die weiche kupferhaltige Grundmatrix einerseits die Gleiteigenschaften der Oberflächenschicht erheblich verbessern, und anderseits die in die kupferhaltige Schicht eingeschlossenen Bereiche mit Hartphasen die weiche kupferhaltige Grundmatrix mechanisch stabilisieren und der Schicht lokal die notwendige Härte verleihen, so dass nicht nur die Gleiteigenschaften der Schicht deutlich verbessert sind, sondern die Oberflächenschicht auch einen sehr guten Schutz gegen mechanische Belastungen und Verschleiss bietet. So kann z.B. eine Oberfläche eines Lagersattels für eine Welle oder der Lagerbereich eines Gegenparts mit einer solchen Schicht vorteilhaft versehen sein.

In einem bevorzugten Ausführungsbeispiel enthält das Spritzpulver zusätzlich 0.01 % bis 1 % Gewichts-Prozent Titan. Titan geht dabei als zusätzlicher Bestandteil in die intermetallische Phase bzw. die intermetallische Verbindung mit eine und führt so zu einer weiteren Erhöhung der Härte der Hartphasen, so dass eine mit diesem Spritzpulver gespritzte Oberflächenschicht noch besser gegen Verschleiss geschützt ist.

Um besonders gute Ergebnisse beim thermischen Spritzen zu erzielen, liegt die Teilchengrösse des Spritzpulvers besonders vorteilhaft zwischen 5 µm und 120 µm, vorzugsweise zwischen 10 µm und 60 µm und ist vorzugsweise durch Gasverdüsen, Wasserverdüsen, Sintern, Sprühtrocknen oder mechanisches Legieren hergestellt.

Das Spritzpulver eignet sich in besonderer Weise zum thermischen Spritzen einer Oberflächenschicht auf ein Werkstück, das in lagerndem Kontakt mit einem anderen Werkstück zusammenwirkt.

Erfindungsgemäss weist eine durch thermisches Spritzen aufgebrachte kupferhaltige Oberflächenschicht, insbesondere eine Lagerschicht eines Lagerteils einer Lagervorrichtung, mindestens folgende Zusammensetzung auf: Zink = 5% bis 30% Gewichts-Prozent, Zinn = 1 % bis 10% Gewichts-Prozent, Silizium = 0.1 % bis 3% Gewichts-Prozent, Aluminium = 0.1 % bis 7% Gewichts-Prozent, Eisen = 0.01 % bis 2% Gewichts-Prozent, Mangan = 0.01 % bis 4% Gewichts-Prozent, Kobalt = 0.01 bis 3% Gewichtsprozent, Kupfer = Differenz auf 100% Gewichts-Prozent.

Wie bereits erläutert, weist eine erfindungsgemässe Oberflächenschicht mehr oder weniger isolierte Hartphasen aus Eisen, Kobalt, Mangan und Silizium auf, die zusätzlich eventuell noch Titan enthalten und entsprechend räumlich mehr oder weniger isolierte Bereiche bilden. Diese Hartphasen bilden relativ harte Bereiche, das heisst Bereiche mit hoher Härte, in der ansonsten verhältnismässig weichen kupferhaltigen Schicht, die im wesentlichen durch die Kupfer-Aluminium Zink-Grundmatrix gebildet ist. Die Härte dieser Hartphase kann dabei zum Beispiel zwischen 300 HV und 500 HV, wobei HV wie üblich Vickers Härte bedeutet, und bevorzugt ca. 400 HV betragen, während die kupferhaltige Grundmatrix in Bereichen ausserhalb der Hartphasen Härten zwischen 80 HV und 200 HV, bevorzugt eine Härte von ca. 100 HV haben kann, wobei die Oberflächenschicht bevorzugt eine Grundmatrix aus α-Kupfer aufweist.

Dabei hat die kupferhaltige Grundmatrix nicht nur eine erhebliche Verbesserung der Gleiteigenschaften sowohl bei Trockenschmierung als auch bei Schmierung zwischen zwei Lagerteilen, die durch ein Schmiermittel vermittelt wird, zur Folge, sondern erhöhen auch die Lebensdauer eines Lagers, dessen Lagerteile in lagerndem Kontakt zusammenwirken. Da die kupferhaltige Grundmatrix eine relativ geringe Härte hat, also verhältnismässig weich ist, kann diese insbesondere harte Fremdkörper, die zwischen die Lagerteile des Lagers gelangen, aufnehmen, indem die Fremdkörper in die weiche Kupferlegierung der Kupfermatrix eingedrückt werden, so dass die Oberflächen der Lagerteile vor Beschädigungen durch die harten Fremdkörper geschützt werden. Das heisst, die weiche kupferhaltige Grundmatrix filtert sozusagen die harten Fremdkörper heraus, d.h. die Fremdkörper werden dauerhaft in der kupferhaltigen Grundmatrix eingelagert.

Besonders vorteilhaft ist daher z.B. die Oberflächenschicht eines feucht geschmierten Lagers mit einer erfindungsgemässen Oberflächenschicht versehen. Solche Lager sind in der Regel mit einem Schmieröl geschmiert, das Verschmutzungen aller Art, wie z.B. Abrieb, der an den verschiedensten Stellen in der Maschine entstehen kann, enthalten kann. Zwar sind häufig entsprechende Filtervorrichtungen vorgesehen, wie etwa der Ölfilter in einem Benzin- oder Dieselmotor eines Kraftfahrzeugs, jedoch können damit nur Teilchen ab einer bestimmten Grösse wirksam aus dem Schmiermittel gefiltert werden. Insbesondere kleinere Teilchen im Mikrometerbereich werden nicht oder nur unzureichend heraus gefiltert, so dass sie z.B. zwischen die in lagerndem Kontakt stehenden Teile der Welle gelangen und dort auf Dauer zur Schädigung dieser Lager führen. Sind die entsprechenden Oberflächen jedoch mit einer erfindungsgemässen Oberflächenschicht versehen, werden die schädlichen Verschmutzungen in der weichen kupferhaltigen Oberflächenschicht im Betrieb des Lagers eingelagert, so dass die in lagerndem Kontakt stehenden Oberflächen durch die Verschmutzungen, also die Schmutzteilchen bzw. die Fremdkörper nicht mehr geschädigt werden.

In einem für die Praxis besonders wichtigen Ausführungsbeispiel weist die Oberflächenschicht eine Porosität von 0.5% bis 5% Volumen-Prozent, insbesondere zwischen 1 % und 3% auf. Diese Porosität hat insbesondere bei feucht geschmierten Lagern sehr vorteilhafte Auswirkungen auf die Gleiteigenschaften zwischen zwei in lagerndem Kontakt zusammenwirkenden Lagerteilen, da die Poren Vorratstaschen für Schmieröl bilden, so dass auch unter schwierigen Schmierbedingungen immer genug Schmiermittel zur Schmierung der Lagerteile zur Verfügung steht. Dabei hat sich gezeigt, dass eine Porosität von 0.5% bis 5% Volumen-Prozent, insbesondere zwischen 1 % und 3%, sich besonders günstig auswirkt, so dass dadurch die Schmierung z.B. sowohl im Zustand der Mangelschmierung, als auch im Zustand der hydrodynamischen Schmierung zwischen den Lagerteilen weiter verbessert wird.

Vorteilhaft wird eine erfindungsgemässe Oberflächenschicht durch Honen nachbearbeitet, um deren Güte zu erhöhen und / oder an spezielle geometrische Erfordernisse anzupassen.

Ein besonderer Vorteil ergibt sich für eine aus dem Stand der Technik bekannte Lagervorrichtung, die zwischen zwei zu lagernden Lagerteilen zusätzlich eine Lagerschale aufweist. Lagerschalen werden z.B. in Wellenlagern verwendet und sind, wie dem Fachmann wohlbekannt ist, zwischen der Welle selbst und in einer Lagermulde, die im Lagersattel ausgebildet ist, angeordnet. Die Lagerschalen selbst sind aus einem Material gefertigt, das z.B. eine geringere Härte aufweist als die Welle, so dass im Betrieb in erster Linie die Lagerschale einem erhöhten Verschleiss unterliegt, so dass ein entsprechender Verschleiss an der Welle selbst reduzierbar ist und der Lagersattel praktische keinen Verschleiss durch Reibung erfährt, weil die Welle nicht unmittelbar mit dem Lagersattel zusammenwirkt, sondern mit der Lagerschale. Das heisst, in solchen Lagervorrichtungen muss zwingend eine Lagerschale vorgesehen sein, da ansonsten die Welle selbst und / oder der Lagersattel in relativ kurzer Zeit verschleissen würde, und somit praktisch das ganze Lager mit Lagersattel und Welle ausgetauscht werden müsste, während, wenn zusätzlich eine Lagerschale vorgesehen ist, nur die Lagerschale ausgetauscht werden muss.

Es liegt auf der Hand, dass ein Lager mit Lagerschale verhältnismässig aufwendig und damit teuer ist und auch das Austauschen der Lagerschalen mit erheblichem Aufwand und Kosten verbunden ist.

Wird dagegen ein Lagerteil einer Lagervorrichtung mit einer erfindungsgemässen Oberflächenschicht versehen, kann auf eine Lagerschale ganz verzichtet werden, da die erfindungsgemässe Oberflächenschicht die Lagerteile gegen Verschleiss schützt, so dass auf eine Lagerschale, die bei einer bekannten Lagervorrichtung dem Schutz der Lagerteile dient, verzichtet werden kann.

Schliesslich betrifft die Erfindung ein Spritzverfahren zum Herstellen einer erfindungsgemässen Oberflächenschicht mit einem erfindungsgemässen Spritzpulver, insbesondere zum Herstellen einer Oberflächenschicht auf einem Lagerteil eines Wellenlagers, wobei das Spritzverfahren ein thermisches Spritzverfahren, insbesondere ein atmosphärisches Plasmaspritzverfahren, ein Vakuumplasmaspritzverfahren, ein HVOF-Verfahren, ein Flammspritzverfahren oder ein Kaltgasspritzverfahren ist.

Die Erfindung wird im Folgenden an Hand der Zeichnung näher erläutert. Es zeigt in schematischer Dartellung:

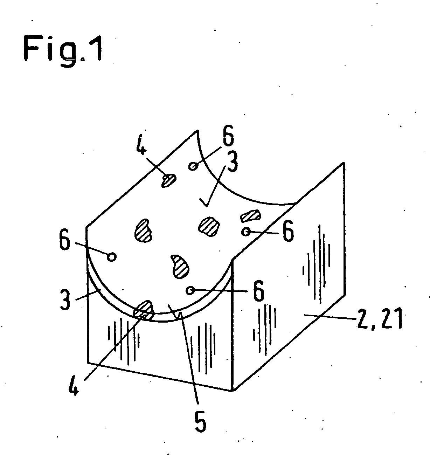

- Fig. 1: ein Lagerteil eines Wellenlagers mit einer erfindungsgemässen Oberflächenschicht.

Fig. 1 zeigt in einer schematischen Darstellung ein Lagerteil 2 eines Wellenlagers mit einer erfindungsgemässen Oberflächenschicht 3 im Schnitt. Dargestellt ist ein Schnitt durch einen Lagersattel 21 eines Wellenlagers für eine Maschine. Der Lagersattel 21 weist eine Lagerfläche 5 auf, die mit einer erfindungsgemässen Oberflächenschicht 3 versehen ist. Die Oberflächenschicht 3 umfasst Bereiche 4, die von Hartphasen aus Eisen, Kobalt, Mangan und Silizium gebildet werden und eventuell noch Titan enthalten, und der Schicht die notwendige Widerstandskraft gegen mechanischen Verschleiss verleihen, wobei die weiche kupferhaltige Grundmatrix der Oberflächenschicht 3 einerseits die Gleitfähigkeit einer hier nicht dargestellten Welle auf der Oberflächenschicht 3 erhöht und anderseits dazu geeignet ist Schmutzteilchen einzulagern. Schmutzteilchen können zum Beispiel durch ein Schmieröl dem Wellenlager zugeführt werden, wobei das Schmieröl in an sich bekannter Weise von einer hier nicht dargestellten Ölpumpe durch die Schmierölöffnungen 6 zwischen die Oberfläche des Lagersattels 21 und die ebenfalls nicht dargestellte, daringelagerte Welle gepresst wird. Durch die erfindungsgemässe Oberflächenschicht 3 ist eine Lagerschale bei dem in Fig. 1 dargestellten Wellenlager überflüssig, da die Oberflächenschicht 3 einerseits die Lagerfläche 5 des Lagersattels 21 im Betriebszustand vor Verschleiss, z.B. durch Reibung mit Welle, schützt und andererseits durch die durch die kupferhaltige Grundmatrix die Gleitfähigkeit der Welle auf der Oberfläche 3 derart verbessert ist, dass eine Lagerschale, wie sie bei Kurbelwellenlagern aus dem Stand der Technik bekannt und notwendig sind, nicht mehr notwendig ist.

Durch die Erfindung wird somit ein Spritzpulver zur Beschichtung eines Lagerteils einer Lagervorrichtung mittels thermischen Spritzens bereitgestellt. Ein charakteristisches Kennzeichen der mit dem erfindungsgemässen Spritzpulver gespritzten Oberflächenschichten ist dabei, dass die erfindungsgemässe kupferhaltige Oberflächenschicht nicht nur eine erhebliche Verbesserung der Gleiteigenschaften sowohl bei Trockenschmierung als auch bei Schmierung zwischen zwei Lagerteilen, die durch ein Schmiermittel vermittelt wird, zur Folge hat, sondern auch die eingelagerten Hartphasen die Lebensdauer eines Lagers, dessen Lagerteile in lagerndem Kontakt zusammenwirken, deutlich erhöht. Das hat seine Ursache unter anderem darin, dass die weiche kupferhaltige Grundmatrix eventuelle Schmutzteilchen, die sich zwischen zwei Lagerteilen befinden, einlagern und dadurch binden, so dass diese keine schädlichen Wirkungen an den Oberflächen der Lagerteile mehr verursachen können. Dabei hat die erfindungsgemässe kupferhaltige Oberflächenschicht durch die Hartphasen gleichzeitig eine genügend hohe Härte, so dass das beschichtete Lagerteil so hervorragend gegen Verschleiss, zum Beispiel durch Reibung geschützt ist, dass auf Lagerschalen verzichtet werden kann, wie sie insbesondere bei Wellenlagern oder anderen Lagern aus dem Stand der Technik notwendig sind. Somit wird durch die Erfindung nicht nur die Lebensdauer von an sich bekannten Lagerteilen und der entsprechenden Lager insgesamt deutlich erhöht, sondern es wird auch möglich, bestimmte bekannte Lagervorrichtungen konstruktiv erheblich zu vereinfachen.

## Patentansprüche

1. Spritzpulver zum Beschichten eines Substrats (2), insbesondere zum Beschichten eines Lagerteils (2) einer Lagervorrichtung, welches Spritzpulver mindestens folgende Zusammensetzung aufweist:
Zink = 5% bis 30% Gewichts-Prozent
Zinn = 1% bis 10% Gewichts-Prozent
Silizium = 0.1% bis 3% Gewichts-Prozent
Aluminium = 0.1 % bis 7% Gewichts-Prozent
Eisen = 0.01% bis 2% Gewichts-Prozent
Mangan = 0.01% bis 4% Gewichts-Prozent
Kobalt = 0.01 % bis 3% Gewichtsprozent
Kupfer = Differenz auf 100% Gewichts-Prozent
**dadurch gekennzeichnet, dass** Eisen zu 2% Gewichtsprozent und / oder Kobalt zu 3% Gewichtsprozent und / oder Titan zu 1 % Gewichtsprozent enthalten ist.

2. Spritzpulver nach Anspruch 1, wobei das Spritzpulver 0.01% bis 1 % Gewichts-Prozent Titan enthält.

3. Spritzpulver nach Anspruch 1 oder 2, wobei die Grösse der Partikel des Spritzpulvers zwischen 5µm und 120µm, vorzugsweise zwischen 10µm und 60µm liegt.

4. Spritzpulver nach einem der vorangehenden Ansprüche, wobei das Spritzpulver durch Gasverdüsen, Wasserverdüsen, Sintern, Sprühtrocknen oder mechanisches Legieren gestellt ist.

5. Durch thermisches Spritzen aufgebrachte kupferhaltige Oberflächenschicht, insbesondere eine Lagerschicht eines Lagerteils (2) einer Lagervorrichtung, welche Oberflächenschicht (3) mindestens folgende Zusammensetzung aufweist:
Zink = 5% bis 30% Gewichts-Prozent
Zinn = 1% bis 10% Gewichts-Prozent
Silizium = 0.1% bis 3% Gewichts-Prozent
Aluminium = 0.1 % bis 7% Gewichts-Prozent
Eisen = 0.01 % bis 2% Gewichts-Prozent
Mangan = 0.01% bis 4% Gewichts-Prozent
Kobalt = 0.01 % bis 3% Gewichtsprozent
Kupfer = Differenz auf 100% Gewichts-Prozent
**dadurch gekennzeichnet, dass** die Oberflächenschicht isolierte Hartphasen aufweist, die durch Ausscheidungen umfassend Eisen, Kobalt, Mangan und Silizium gebildet sind.

6. Oberflächenschicht nach Anspruch 5, wobei die Oberflächenschicht zusätzlich 0.01% bis 1% Gewichts-Prozent Titan enthält.

7. Oberflächenschicht nach einem der Ansprüche 5 oder 6, wobei die Oberflächenschicht eine Grundmatrix aus α-Kupfer Mischkristallen aufweist.

8. Oberflächenschicht nach einem der Ansprüche 5 bis 7, wobei die Oberflächenschicht Ausscheidungen von Eisen und / oder Kobalt und / oder Mangan und / oder Silizium als Hartphase (4) aufweist.

9. Oberflächenschicht nach einem der Ansprüche 5 bis 8, wobei die Oberflächenschicht eine Porosität von 0.5% bis 5% Volumen-Prozent, insbesondere zwischen 1% und 3% aufweist.

10. Oberflächenschicht nach einem der Ansprüche 5 bis 9, die durch Honen nachbearbeitet ist.

11. Spritzverfahren zum Herstellen einer Oberflächenschicht (3) nach einem der Ansprüche 5 bis 10, zum Herstellen einer Oberflächenschicht (3) auf einem Lagerteil (2) eines Wellenlagers, wobei das Spritzverfahren ein thermisches Spritzverfahren, insbesondere ein atmosphärisches Plasmaspritzverfahren, ein Vakuumplasmaspritzverfahren, ein HVOF-Verfahren, ein Flammspritzverfahren oder ein Kaltgasspritzverfahren ist.

## Claims

1. A spray powder for coating a substrate (2), in particular for coating a bearing part (2) of a bearing apparatus, said spray powder having at least the following composition:
Zinc = 5% to 30% by weight
Tin = 1% to 10% by weight
Silicon = 0.1 % to 3% by weight
Aluminium = 0.1% to 7% by weight
Iron = 0.01% to 2% by weight
Manganese = 0.01% to 4% by weight
Cobalt = 0.01% to 3% by weight
Copper = the balance to 100% in % by weight,
**characterised in that** iron is contained in 2 % by weight and/or cobalt in 3 % by weight and/or titanium in 1 % by weight.

2. A spray powder in accordance with claim 1, wherein the spray powder additionally contains 0.01% to 1% by weight titanium.

3. A spray powder in accordance with claim 1 or claim 2 wherein the size of the particles of the spray powder lies between 5 µm and 120 µm, preferably between 10 µm and 60 µm.

4. A spray powder in accordance with any one of the previous claims wherein the spray powder is made available by means of passage through a nozzle in gas or in water, sintering, spray drying or mechanical alloying.

5. A copper-containing surface layer applied by thermal spraying, in particular a bearing layer of a bearing part (2) of a bearing apparatus, the surface layer of which (3) has at least the following composition:
Zinc = 5% to 30% by weight
Tin = 1% to 10% by weight
Silicon = 0.1% to 3% by weight
Aluminium = 0.1% to 7% by weight
Iron = 0.01% to 2% by weight
Manganese = 0.01% to 4% by weight
Cobalt = 0.01 % to 3% by weight
Copper = the balance to 100% in % by weight,
**characterised in that** the surface layer has isolated hard phases, which are formed by precipitations including iron, cobalt, manganese and silicon.

6. A surface layer in accordance with claim 5, wherein the surface layer additionally contains 0.01% to 1% by weight titanium.

7. A surface layer in accordance with any one of the claims 5 or 6, wherein the surface layer has a base matrix of α-copper mixed crystals.

8. A surface layer in accordance with any one of the claims 5 to 7, wherein the surface layer has precipitations of iron and / or cobalt and / or manganese and /or silicon as a hard phase (4).

9. A surface layer in accordance with any one of the claims 5 to 8, wherein the surface layer has a porosity of 0.5% to 5% by volume, in particular between 1% and 3%.

10. A surface layer in accordance with any one of the claims 5 to 9 which is finished by means of honing.

11. A spraying process for the manufacture of a surface layer (3) in accordance with any one of the claims 5 to 10, in particular for the manufacture of a surface layer (3) on a bearing part (2) of a shaft bearing, wherein the spraying process is a thermal spraying process, in particular an atmospheric plasma spraying process, a vacuum plasma spraying process, a HVOF- process, a flame spraying process or a cold gas spraying process.

## Revendications

1. Poudre de pulvérisation pour le recouvrement d'un substrat (2), en particulier pour le recouvrement d'un élément de palier (2) d'un dispositif de palier, laquelle poudre de pulvérisation présente au moins la composition suivante:
- 5 à 30 % de poids de zinc;
- 1 à 10 % de poids d'étain;
- 0,1 à 3 % de poids de silicium;
- 0,1 à 7 % de poids d'aluminium;
- 0,01 à 2 % de poids de fer;
- 0,01 à 4 % de poids de manganèse;
- 0,01 à 3 % de poids de cobalt; et
- le solde jusqu'à 100 % de poids de cuivre;
**caractérisée en ce qu'**elle contient du fer à 2 % de poids et/ou du cobalt à 3 % de poids et/ou du titane à 1 % de poids.

2. Poudre de pulvérisation selon la revendication 1, dans laquelle la poudre de pulvérisation contient de 0,01 à 1 % de poids de titane.

3. Poudre de pulvérisation selon la revendication 1 ou 2, dans laquelle la taille des particules de la poudre de pulvérisation se situe entre 5 µm et 120 µm, et de préférence entre 10 µm et 60 µm.

4. Poudre de pulvérisation selon l'une des revendications précédentes, dans laquelle la poudre de pulvérisation est réalisée par atomisation au gaz, atomisation à l'eau, frittage, séchage par pulvérisation ou alliage mécanique.

5. Couche de surface contenant du cuivre appliquée par pulvérisation thermique, en particulier couche de recouvrement d'un élément de palier (2) d'un dispositif de palier, laquelle couche de surface (3) présente au moins la composition suivante:
- 5 à 30 % de poids de zinc;
- 1 à 10 % de poids d'étain;
- 0,1 à 3 % de poids de silicium;
- 0,1 à 7 % de poids d'aluminium;
- 0,01 à 2 % de poids de fer;
- 0,01 à 4 % de poids de manganèse;
- 0,01 à 3 % de poids de cobalt; et
- le solde jusqu'à 100 % de poids de cuivre;
**caractérisée en ce que** la couche de surface présente des phases dures isolées qui sont formées par des précipitations comprenant du fer, du cobalt, du manganèse et du silicium.

6. Couche de surface selon la revendication 5, dans laquelle la couche de surface contient en outre de 0,01 % à 1 % de poids de titane.

7. Couche de surface selon l'une des revendications 5 ou 6, dans laquelle la couche de surface présente une matrice de base constituée de cristaux mixtes de cuivre α.

8. Couche de surface selon l'une des revendications 5 à 7, dans laquelle la couche de surface présente en tant que phase dure (4) des précipitations de fer et/ou de cobalt et/ou de manganèse et/ou de silicium.

9. Couche de surface selon l'une des revendications 5 à 8, dans laquelle la couche de surface présente une porosité de 0,5 % à 5 % de volume, et en particulier de 1 % à 3 %.

10. Couche de surface selon l'une des revendications 5 à 9, qui est également traitée par pierrage.

11. Procédé de pulvérisation permettant la réalisation d'une couche de surface (3) selon l'une des revendications 5 à 10 pour la réalisation d'une couche de surface (3) sur un élément de palier (2) d'un palier d'arbre, dans lequel le procédé de pulvérisation est un procédé de pulvérisation thermique, en particulier un procédé de pulvérisation au plasma atmosphérique, un procédé de pulvérisation au plasma sous vide, un procédé HVOF, un procédé de métallisation ou un procédé de pulvérisation au gaz épuré.
